## Europäisches Patentamt
## European Patent Office
## Office européen des brevets

(19)

(11) Veröffentlichungsnummer: **0 069 057**
**B1**

(12) # EUROPÄISCHE PATENTSCHRIFT

(45) Veröffentlichungstag der Patentschrift:
08.05.85

(21) Anmeldenummer: **82810240.0**

(22) Anmeldetag: **03.06.82**

(51) Int. Cl.⁴: **B 65 G 53/52**, B 65 G 53/14,
C 25 C 3/14

(54) **Vorrichtung zur portionenweisen Dosierung eines fluidisierbaren Schüttgutes und deren Verwendung.**

(30) Priorität. **15.06.81 CH 3911/81**

(43) Veröffentlichungstag der Anmeldung:
**05.01.83 Patentblatt 83/1**

(45) Bekanntmachung des Hinweises auf die Patenterteilung:
**08.05.85 Patentblatt 85/19**

(84) Benannte Vertragsstaaten:
**AT CH DE FR GB IT LI**

(56) Entgegenhaltungen:
**DE - A - 1 456 612**
**DE - A - 1 949 173**
**GB - A - 685 365**
**GB - A - 2 058 137**
**US - A - 4 016 053**

(73) Patentinhaber: **SCHWEIZERISCHE ALUMINIUM AG,
CH-3965 Chippis (CH)**

(72) Erfinder: **Jaggi, Ernst, N-5450 Sunde (NO)**

Anmerkung. Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf eine Vorrichtung zum portionenweisen Zuführen eines fluidisierbaren Schüttgutes aus einem mit wenigstens einer Austrittsöffnung versehenen Silo zu einem Reaktionsgefäß, insbesondere von Tonerde aus einem Tagessilo zu einem Krustendurchbruch einer Schmelzflußelektrolysezelle zur Herstellung von Aluminium, und ein Verfahren zu deren Betrieb.

Für die Gewinnung von Aluminium durch Schmelzflußelektrolyse von Aluminiumoxid wird dieses in einer Fluoridschmelze gelöst, die zum größten Teil aus Kryolith besteht. Das kathodisch abgeschiedene Aluminium sammelt sich unter der Fluoridschmelze auf dem Kohleboden der Zelle, wobei die Oberfläche des flüssigen Aluminiums die Kathode bildet. In die Schmelze tauchen von oben Anoden ein, die bei konventionellen Verfahren aus amorphem Kohlenstoff bestehen. An den Kohleanoden entsteht durch die elektrolytische Zersetzung des Aluminiumoxids Sauerstoff, der sich mit dem Kohlenstoff der Anoden zu $CO_2$ und CO verbindet. Die Elektrolyse findet in einem Temperaturbereich von etwa $940-970°C$ statt.

Im Laufe der Elektrolyse verarmt der Elektrolyt an Aluminiumoxid. Bei einer unteren Konzentration von 1 bis 2 Gew.-% Aluminiumoxid im Elektrolyten kommt es zum Anodeneffekt, der sich in einer Erhöhung der Spannung von beispielsweise 4 bis 5 V auf 30 V und darüber auswirkt. Spätestens dann muß die Kruste aus festem Elektrolytmaterial eingeschlagen und die Aluminiumoxidkonzentration durch Zugabe von neuer Tonerde angehoben werden.

Die Zelle wird im normalen Betrieb üblicherweise periodisch bedient, auch wenn kein Anodeneffekt auftritt. Außerdem muß bei jedem Anodeneffekt die Kruste eingeschlagen und die Tonerdekonzentration durch Zugabe von neuem Aluminiumoxid angehoben werden, was einer Zellenbedienung entspricht.

Zur Zellenbedienung ist über lange Jahre die Kruste zwischen den Anoden und dem Seitenbord der Elektrolysezelle eingeschlagen und anschließend neues Aluminiumoxid zugegeben worden. Diese Praxis stößt auf zunehmende Kritik, wegen Verschmutzung der Luft in der Elektrolysehalle und der äußeren Atmosphäre. Bei gekapselten Elektrolysezellen kann eine maximale Zurückhaltung der Prozeßgase jedoch nur gewährleistet werden, wenn die Bedienung automatisch erfolgt. Nach dem Einschlagen der Kruste wird die Tonerde entweder lokal und kontinuierlich nach dem »Point-Feeder«-Prinzip oder nicht kontinuierlich über die ganze Zellenlängs- bzw. Zellenquerachse zugeführt.

Die bekannten, auf den Elektrolysezellen angeordneten Vorratsbunker bzw. Tonerdesilos sind im allgemeinen in Form von Trichtern oder Behältern mit einem trichterförmigen bzw. konisch auslaufenden Unterteil ausgebildet. Der Inhalt der auf der Zelle angeordneten Silos deckt im allgemeinen einen ein- bis zweifachen Tagesbedarf, sie werden daher auch Tagessilos genannt.

Die Tonerdezufuhr vom Silo zu einem Durchbruch in der den schmelzflüssigen Elektrolyten überdeckenden Kruste erfolgt bei bekannten Vorrichtungen durch Öffnen einer Klappe, die zwekkes Chargierung geschwenkt wird (siehe GB-A-2 058 137), oder nach anderen Systemen mit Dosierschnecken, Dosierzylindern oder dergleichen.

Diese bekannten Dosiervorrichtungen haben den Nachteil, daß mechanisch bewegbare Teile in den anodischen Teil der Elektrolysezelle eingebaut sein müssen. Dadurch sind sie den Einwirkungen der Ofenatmosphäre mit ihrer Hitze und Staubbelastung unterworfen, was einen mehr oder weniger umfangreichen Unterhalt erfordert.

Die Erfinder haben sich deshalb die Aufgabe gestellt, eine Vorrichtung zur Portionenweisen Dosierung eines fluidisierbaren Schüttgutes zu schaffen, die keine mechanisch bewegbaren Elemente aufweist, wobei deren einfacher Aufbau eine kostengünstige Herstellung und eine weitgehende Wartungsfreiheit gewährleisten soll. Ferner soll die Verwendung dieser Vorrichtung aufgezeigt werden.

In bezug auf die Vorrichtung wird die Aufgabe erfindungsgemäß gelöst durch

- ein an die Siloaustrittsöffnung angeflanschtes, steiler als 45° verlaufendes Füllrohr, das
- in die obere Hälfte eines in bezug auf die Horizontale ebenfalls mindestens 45° geneigten, unten verschlossenen Dosierrohres mündet, wobei die Längsachsen von Dosier- und Füllrohr einen Winkel von wenigstens 45° bilden,
- eine in den untersten Bereich des Dosierrohres mündende Druckluftleitung mit einem mittels eines Zeitrelais betätigbaren Steuerventil,
- eine an die obere Öffnung des Dosierrohres anschließende Auffang- bzw. Abbremskammer für den weggeschossenen Schüttgutpfropfen, und
- ein mindestens im oberen Bereich ungefähr vertikal verlaufendes, unterhalb der Auffang- bzw. Abbremskammer angeordnetes Abflußrohr, welches das Schüttgut unter Einwirkung der Schwerkraft vollständig einer vorbestimmten Stelle im Reaktionsgefäß zuführt.

Das aus dem Silo über das Füllrohr in das Dosierrohr fließende Schüttgut bildet in Ruhestellung einen Schüttkegel; dessen Spitze liegt im obersten Bereich der Einmündungsöffnung des Füllrohres. Im unteren Teil des Dosierrohres ist so ein Pfropfen aus dem fluidisierbaren Schüttgut eingebettet.

Die Silööffnung kann mit einem Verschließorgan versehen sein, das in normaler Ruhestellung nicht betätigt wird. Muß die Dosiervorrichtung jedoch aus irgendeinem Grunde, z. B. zwecks Reparatur oder wegen Verstopfung, entfernt werden, kann der Silo vor deren Abflanschen verschlossen werden.

Die minimale Länge des Füllrohres muß so gewählt sein, daß die Dosiervorrichtung einen hinreichenden Abstand vom Silo hat. Insbesondere kann die Ausgestaltung der Auffang- bzw. Abbremskammer auf diese Minimallänge einen maßgebenden Einfluß haben. Die maximale Füllrohrlänge dagegen wird in erster Linie durch die Geometrie des Reaktionsgefäßes und die Stabilitätsanforderungen an die Dosiervorrichtung bestimmt.

Sowohl die minimale Neigung des Füllrohres als auch diejenige des Dosierrohres werden durch den Schüttwinkel des zu dosierenden fluidisierbaren Gutes bestimmt; sie muß über dem größten Schüttwinkel liegen, damit unerwünschte Rohrverstopfungen vermieden werden können. Mit einer Neigung von mindestens 45° sind diese Anforderungen erfüllt.

Bevorzugt liegen Füll- und Dosierrohr in einer gemeinsamen Vertikalebene. Bei Schmelzflußelektrolysezellen zur Herstellung von Aluminium liegt diese Vertikalebene, in welcher bevorzugt auch das Abflußrohr angeordnet ist, zweckmäßig parallel zu den Stirnseiten der Zelle.

Bei der kurzzeitigen Einleitung von Druckluft in den untersten Bereich des Dosierrohres wird der Schüttgutpfropfen weggeschossen. Der Impuls des beförderten Gutes muß vor dem Eintritt in das Reaktionsgefäß abgebremst werden, weil durch die Wucht des Aufschlages von der Beschaffenheit des Schüttgutes abhängige nachteilige Wirkungen auftreten würden, z. B. übermäßige Staubentwicklung, Erosion von exponierten Teilen der Vorrichtung, Spritzer des im Reaktionsgefäß angeordneten Bades usw.

Die erfindungsgemäß vorgesehene Auffang- bzw Bremskammer hat deshalb den Schüttgutteilchen den Impuls, welcher durch das Druckgas verliehen wird, nach dem Verlassen des Dosierrohres wieder zu entziehen. Diese Kammer ist so ausgestaltet, daß das noch nicht gebremste Schüttgut über eine möglichst geringe Strecke mit der Wandung in Berührung kommt. Zweckmäßig wird ein gerades Dosierrohr mit einem ebenfalls geraden Abflußrohr ineinanderlaufend spitzwinklig verschweißt. Bevorzugt hat dabei das Abflußrohr mindestens den Querschnitt des Dosierrohres. Das erste kann oberhalb der Einmündung des Dosierrohres einen in bezug auf die Flugrichtung des Schüttgutpfropfens einen schräg nach oben laufenden Deckel haben, wobei dessen Neigung beispielsweise 30 - 60 betragen kann. Der oberste Bereich des Abflußrohres bildet so die den Impuls des Schüttgutes vernichtende Auffang- bzw. Abbremskammer. Diese Kammer muß so groß sein, daß der gesamte hineingeschossene Pfropfen darin Platz findet, bevor er unter der Einwirkung der Schwerkraft durch das Abflußrohr zum Reaktionsgefäß geführt wird.

Die Auffang- bzw. Abbremskammer kann beispielsweise auch in Form einer Kugel oder Halbkugel, sowie eines Kegels oder Kegelstumpfs ausgebildet sein.

Um beim Auftreten von unerwarteten Verschleißerscheinungen oder sonstigen Störungen im Bereich der Auffang- bzw. Abbremskammer nicht die gesamte Dosiervorrichtung ersetzen zu müssen, können zum Dosier- und Förderrohr lösbare Verbindungen vorgesehen sein, beispielsweise mittels verschraubbarer Flansche.

Der zweckmäßig eben ausgebildete Boden des Dosierrohres verläuft bei der Einmündung der Druckleitung vorzugsweise spitzwinklig zu der Rohrwandung, beispielsweise mit einem Winkel von 30—60°. Dadurch kann die eine Schubkraft auf das Füllgut ausübende Druckluft optimal eingesetzt werden.

Für die kontinuierliche Speisung von Schmelzflußelektrolysezellen mittels »Point feeding« haben sich Dosiervolumen von ca. 1—2 l als optimal erwiesen. Für die Erreichung von reproduzierbaren, genauen Dosiermengen ist das Dosierrohr eher dünn und lang als kurz und dick ausgebildet, vorzugsweise beträgt die Länge des unteren Rohrteiles, d. h. bis zur Eintrittsöffnung des Füllrohres, mindestens das Fünffache des Rohrdurchmessers. Bei dünnen Rohren ist die Abweichung durch Schüttwinkelungenauigkeit geringer, weil der Schüttkegel kleiner ist als bei dikken Rohren. Die obere Grenze des Verhältnisses Rohrlänge zur Rohrdicke wird einerseits durch die Zellengeometrie, andererseits durch die Ausbildung von Verstopfung und/oder Luftblasen bestimmt.

Während des Herausschießens des Füllgutes und insbesondere auch während des Abklingens des Luftdruckes kann Schüttgut in das Abflußrohr gelangen, das nicht Bestandteil des in der Ruhephase im Dosierrohr eingebetteten Pfropfens ist. Andererseits könnte — insbesondere bei niedrigem Silofüllstand — ein Teil der Druckluft durch das Füllrohr entweichen. Zum Erreichen möglichst genau reproduzierbarer Dosiermengen können, zusätzlich zum Minimalwinkel von 45° der Längsachsen von Dosier- und Füllrohr, sowie der Geometrie des Dosierrohres, folgende Maßnahmen zur Weiterausgestaltung der Erfindung getroffen werden:

— Der Querschnitt des Füllrohres wird im Vergleich zum Querschnitt des Dosierrohres verkleinert, vorzugsweise in einem Verhältnis von beispielsweise 0,1—0,5 : 1, d. h. der Füllrohrquerschnitt beträgt in diesem Fall nur noch 10—50% vom Dosierrohrquerschnitt.

— Im Silo wird unmittelbar oberhalb der Austrittsöffnung ein nach unten geöffneter Entlastungswinkel eingebaut, z. B. in Form eines die Siloaustrittsöffnung rechtwinklig überdachenden Profilstückes. Dadurch wird sowohl ein übermäßiger Kernfluß im Schüttgut als auch das Herausschießen eines Loches bei sehr niedrigem Silofüllstand weitgehend verhindert.

Füll- und Dosierrohr können in bezug auf den Querschnitt jede vernünftige geometrische Form annehmen, bevorzugt sind deren Querschnitte jedoch kreisförmig ausgebildet. Gerade verlaufende Längsachsen der Rohre verhindern einerseits Verstopfungen und andererseits übermäßigen Verschleiß im oberen Bereich des Dosierrohres.

Für bestimmte Anwendungen, z. B. dem Dosieren von äußerst feinkörnigem Schüttgut, können bestimmte konstruktive Maßnahmen am Abflußrohr darauf ausgehen, die Staubbildung zu minimalisieren, indem die Austrittsgeschwindigkeit durch Ausbildung von Knicken oder Bögen im unteren Teil und/oder speziellen Austrittsöffnungen, vermindert wird.

Schließlich kann nach einer besonders vorteilhaften Ausführungsform der Erfindung dem Steuerventil ein Druckakkumulator vorgeschaltet sein, der zweckmäßig ungefähr das gleiche Volumen wie das Dosierrohr hat. In das Verbindungsrohr zwischen Steuerventil und Akkumulator mündet eine kleinkalibrige, über eine Drossel führende Speiseleitung von Druckluft, welche den Akkumulator auf einen Fülldruck von 4—8 bar bringt. Beim Öffnen des Steuerventils entlädt sich der Akkumulator explosionsartig über die Druckleitung und schießt den Pfropfen aus Schüttgut mit reproduzierbarer Geschwindigkeit aus dem Dosierrohr. Nach dem Schließen des Steuerventils wird der Akkumulator sofort wieder gefüllt und ist nach 5—10 sec betriebsbereit.

In bezug auf die Verwendung der Vorrichtung wird die Aufgabe erfindungsgemäß dadurch gelöst, daß mittels kurzzeitiger Öffnung des Steuerventils in regulierbaren Zeitabständen Druckluft in das Dosierrohr gepreßt und der darin eingebettete Pfropfen aus Schüttgut in die Auffang- bzw. Abbremskammer geschossen wird.

Sehr gute, reproduzierbare Resultate — mit unter 1% liegenden Abweichungen von geförderten Frischtonerdemengen — sind erreicht worden, wenn die Druckluft während 0,3—2 sec mit einem Druck von 4—8 bar in das Dosierrohr gepreßt wird. Der Füllstand im Silo beeinflußt die Genauigkeit der Dosierungen nicht.

Bei Elektrolysehallen zur Herstellung von Aluminium mit moderner Infrastruktur werden sowohl Dauer und Frequenz der Druckluftstöße als auch die Aufladung eines ggf. angeschlossenen Akkumulators mittels EDV gesteuert und mit Krusteneinschlagvorrichtungen koordiniert.

Die Erfindung wird anhand von in der Zeichnung dargestellten Ausführungsbeispielen näher erläutert. Es zeigen schematisch:

Fig. 1 eine Ansicht des unteren Endes eines Tonerdesilos für eine Schmelzflußelektrolysezelle zur Herstellung von Aluminium, mit angeflanschter Dosiervorrichtung aus Stahl.

Fig. 2 eine Variante von Fig. 1 im Vertikalschnitt.

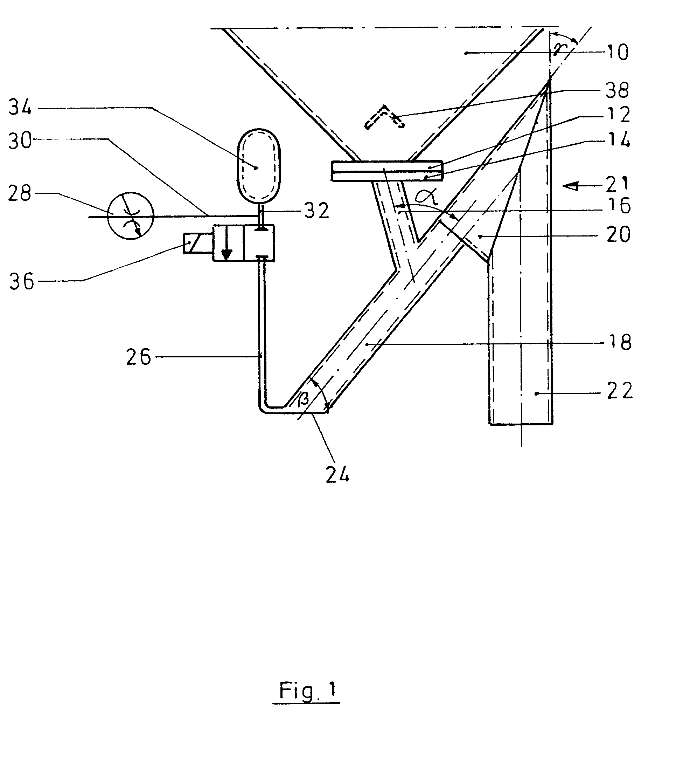

Der in Fig. 1 dargestellte untere, konisch ausgebildete Teil 10 eines Tonerdesilos ist mit einem Flansch 12 und einer runden Austrittsöffnung, welche dem Innendurchmesser des über einen Flansch 14 befestigten Füllrohres 16 entspricht, ausgerüstet. Die Längsachse dieses Füllrohres bildet mit der Längsachse des Dosierrohres 18 einen Winkel ι von ungefähr 50˙.

Das Dosierrohr 18 mit einem Innendurchmesser von etwa 60 mm geht kurz oberhalb der Einmündung des Füllrohres 16 in ein wesentlich weiteres Rohrstück 20 über, das in bezug auf den Durchmesser dem Abflußrohr 22 entspricht. Die beiden Rohre 20 und 22 sind in spitzem Winkel γ von etwa 40˙, entlang einer elliptischen Schweißnaht, miteinander verbunden und bilden in diesem Bereich die Auffang bzw. Abbrems kammer 21.

Der ebene Boden 24 des Dosierrohres 18 bildet mit dem Rohrmantel bei der Eintrittsöffnung der Druckleitung 26 einen spitzen Winkel β von etwa 50°.

Die Druckluft wird über eine mit einer Drossel 28 versehene Druckluftanschlußleitung 30 mit 1—2 mm Innendurchmesser zu einem Verbindungsrohr 32 geführt. Bei geschlossenem Steuerventil 36 wird der Druckluftakkumulator 34 geladen. Bei geöffnetem Steuerventil 36 entlädt sich vorerst explosionsartig der Akkumulator über das Verbindungsrohr 32 und die Druckleitung 26, welche einen Innendurchmesser von 19—20 mm haben. Der Schüttgutpfropfen wird aus dem Dosierrohr 18 hinausgeschossen. Falls das Steuerventil 36 nach dem Hinausschießen des Pfropfens noch während Sekundenbruchteilen offen ist, fließt wenig Druckluft von der Druckluftanschlußleitung 30 über die Druckleitung in das Dosierrohr 18 und dann in das Abflußrohr 22. Diese Luftmenge genügt nicht zur Mitnahme von nennenswerten Mengen von aus dem Füllrohr 16 fließender Tonerde. Es ist also nicht wesentlich für die Dosiergenauigkeit daß das Steuerventil 36 exakt mit dem Austritt des Füllgutpfropfens aus dem Dosierrohr 18 schließt.

Unmittelbar über der Austrittsöffnung des Silounterteils 10 ist ein rechtwinkliges, nach unten geöffnetes Profilstück 38 als Entlastungswinkel angeordnet, welches an den konischen Silowänden befestigt ist.

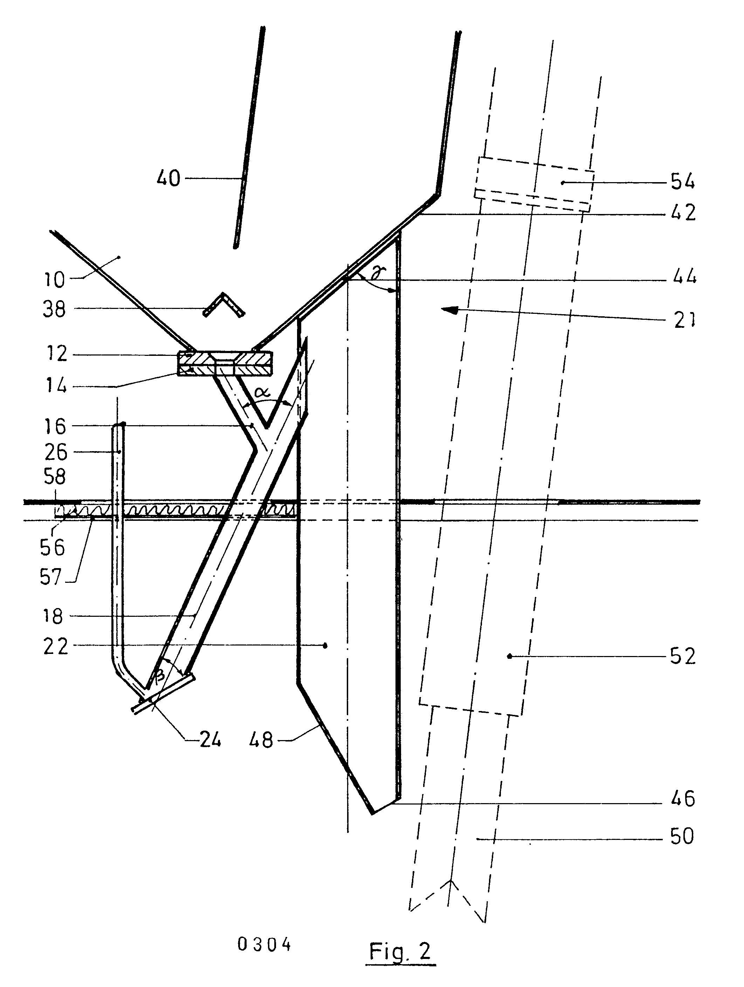

Die in Fig. 2 dargestellte Ausführungsvariante hat im Vergleich zu Fig. 1 folgende geänderte Merkmale:

— Das Füllrohr 16 ist flacher, das Dosierrohr 18 steiler angeordnet, der Winkel ι zwischen den Längsachsen dieser Rohre bleibt ungefähr gleich groß.

— Das obere offene Ende des Dosierrohres 18 ragt in den oberen Bereich des Abflußrohres 22 hinein. Dieses hat im Vergleich zum Dosierrohr 18 einen wesentlich größeren, vorzugsweise mindestens den doppelten Querschnitt und ist mit einem der Silowand 42 angepaßten Flachdeckel 44 verschlossen. Aus Stabilitätsgründen und zwecks besserer Übertragung der Erschütterung beim Wegschießen des Schüttgutpfropfens auf den Silo (Verbesserung des Materialflusses) können Silowand 42 und Flachdeckel 44 lösbar miteinander verbunden sein. Die vergrößerte Auffang- bzw. Abbremskammer 21 endet trotz verschiedener Gestaltung auch in spitzem Winkel γ.

— Die Austrittsöffnung 46 des Abflußrohres 22 ist durch die Anordnung eines steilen Verschlußbleches 48 auf einen Bruchteil des Rohrquerschnittes verkleinert.

— Der Boden 24 des Dosierrohres 18 ist mit einem spitzeren Winkel β etwa 40° angebracht.

Eine Fig. 1 entsprechende Druckluftversorgung mit Steuerventil ist nicht gezeichnet. Angedeutet ist dagegen eine aus Meißel 50, Meißelführung 52 und Druckzylinder 54 bestehende Krusteneinschlagvorrichtung. Die Austrittsöffnung 46 des Abflußrohres 22 ist auf den Durchschlag des Meißels 50 in der Kruste aus erstarrtem Elektrolytmaterial gerichtet.

Die einsatzbereite Dosiereinheit ist mit einem Horizontalblech 57 versehen, welches nach dem Montieren entsprechende Öffnungen in der Zellenkapselung 58 schließt. Geeignete Dichtungsmedien 56 tragen zur vollen Aufrechterhaltung der Wirkung der Zellenkapselung 58 bei. Die unter der Kapselung auf jeden Fall aus Stahl bestehende Druckleitung 26 kann über der Kapselung aus flexiblem synthetischem Material bestehen, weil dort die Wärmeeinwirkung wesentlich geringer ist.

Eine über dem Profilstück 38 angeordnete Scheidewand 40 trennt den Silo in einen großen und einen kleinen Behälter. In der Projektion auf eine Horizontalebene können Profilstücke 38 und Scheidewand 40 jeden beliebigen Winkel einnehmen.

Mit der Vorrichtung nach Fig. 2 ist die Reproduzierbarkeit der Dosiermengen von handelsüblicher Frischtonerde bei verschiedenen Öffnungszeiten des mittels eines Zeitrelais betätigten Steuerventils (36 in Fig 1) geprüft worden. Bei einem Durchmesser der Siloaustrittsöffnung und demselben Innendurchmesser des Füllrohres 16 von 35 mm sind folgende Dosiermengen erhalten worden:

Tabelle I

Dosiermenge in Funktion der Öffnungszeit

| 0,3 sec | 0,8 sec | 1,1 sec | 1,9 sec |
|---------|---------|---------|---------|
| 1540 g | 1545 g | 1550 g | 1560 g |
| 1555 g | | 1580 g | 1550 g |
| 1560 g | | 1560 g | 1555 g |
| 1545 g | | 1560 g | 1545 g |
| 1545 g | | 1558 g | 1520 g |

Bei Öffnungszeiten des Steuerventils von 0,3—1,9 sec liegt die mittlere Abweichung weit unter 1%.

Bei Vergleichsversuchen mit Öffnungszeiten von etwa 4 sec dagegen sind die Dosiermengen erheblich gestiegen und liegen bei etwa 1800 g.

**Patentansprüche**

1. Vorrichtung zum portionenweisen Zuführen eines fluidisierbaren Schüttgutes aus einem mit wenigstens einer Austrittsöffnung versehenen Silo zu einem Reaktionsgefäß, insbesondere von Tonerde aus einem Tagessilo zu einem Krustendurchbruch einer Schmelzflußelektrolysezelle zur Herstellung von Aluminium, gekennzeichnet durch

— ein an die Siloaustrittsöffnung angeflanschtes, steiler als 45° verlaufendes Füllrohr (16), das

— in die obere Hälfte eines in bezug auf die Horizontale ebenfalls mindestens 45° geneigten, unten verschlossenen Dosierrohres (18) mündet, wobei die Längsachsen von Dosier- und Füllrohr einen Winkel (α) von wenigstens 45° bilden,

— eine in den untersten Bereich des Dosierrohres (18) mündende Druckluftleitung (26) mit einem mittels eines Zeitrelais betätigbaren Steuerventil (36),

— eine an die obere Öffnung des Dosierrohres (18) anschließende Auffang- bzw. Abbremskammer (21) für den weggeschossenen Schüttgutpfropfen, und

— ein mindestens im oberen Bereich ungefähr vertikal verlaufendes, unterhalb der Auffang- bzw. Abbremskammer (21) angeordnetes Abflußrohr (22), welches das Schüttgut unter Einwirkung der Schwerkraft vollständig einer vorbestimmten Stelle im Reaktionsgefäß zuführt.

2. Vorrichtung nach Anspruch 1, dadurch gekennzeichnet, daß die Längsachsen von Dosier- (18) und Füllrohr (16) in einer gemeinsamen Vertikalebene liegen.

3. Vorrichtung nach Anspruch 1 oder 2, dadurch gekennzeichnet, daß der das Dosierrohr (18) unten verschließende ebene Boden (24) bei der Einmündung der Druckleitung (26) spitzwinklig zu der Rohrwandung, vorzugsweise mit einem Winkel (β) von 30—60°, ausgebildet ist.

4. Vorrichtung nach mindestens einem der Ansprüche 1—3, dadurch gekennzeichnet, daß der Querschnitt des Dosierrohres (18) im obersten Bereich auf den Querschnitt des Abflußrohres (22) erweitert ist, und daß die beiden in spitzem Winkel (γ) von vorzugsweise 30—60 miteinander verschweißten Rohre die Auffang- bzw. Abbremskammer (21) bilden.

5. Vorrichtung nach mindestens einem der Ansprüche 1—3, dadurch gekennzeichnet, daß ein oberhalb der Einmündung des Dosierrohres (18) in das mindestens den doppelten Querschnitt aufweisende Abflußrohr (22) angeordneter Deckel (44) in bezug auf die Schußrichtung schräg nach oben, vorzugsweise mit einem Winkel (γ) von 30—60°, verläuft, wobei der oberste Bereich des Abflußrohres (22) die Auffang- bzw. Abbremskammer (21) bildet.

6. Vorrichtung nach mindestens einem der Ansprüche 1—5, dadurch gekennzeichnet, daß der Querschnitt des Füllrohres (16) kleiner ist als derjenige des Dosierrohres (18), wobei das Verhältnis vorzugsweise 0,1—0,5 : 1 beträgt.

7. Vorrichtung nach mindestens einem der Ansprüche 1—6, dadurch gekennzeichnet, daß im Silo, unmittelbar oberhalb von dessen Austrittsöffnung, ein nach unten geöffnetes Profilstück (38) als Entlastungswinkel angeordnet ist.

8. Vorrichtung nach mindestens einem der Ansprüche 1—7, dadurch gekennzeichnet, daß der Druckleitung (26) und dem Steuerventil (36) ein Druckluftakkumulator (34), mit vorzugsweise gleichem Volumen wie das Dosierrohr (18), vorgeschaltet ist, der über eine mit einer Drossel (28) versehene, kleinkalibrige Druckluftanschlußleitung (30) aufladbar und durch pneumatische Betätigung des Steuerventils (36) entladbar ist.

9. Verwendung der Vorrichtung nach mindestens einem der Ansprüche 1—8, dadurch gekennzeichnet, daß mittels kurzzeitiger Öffnung des Steuerventils (36) in regulierbaren Zeitabständen Druckluft in das Dosierrohr (18) gepreßt und der darin eingebettete Pfropfen aus Schüttgut in die Auffang- bzw. Abbremskammer (21) geschossen wird.

10. Verwendung nach Anspruch 90, dadurch gekennzeichnet, daß die Druckluft während 0,3—2 sec, mit einem Druck von 4—8 bar, in das Dosierrohr (18) gepreßt wird.

## Claims

1. Device for feeding a fluidisable bulk material by portions from a silo provided with at least one outlet opening to a reaction vessel, especially alumina from a silo to a crust break-through of a fusion electrolysis cell for the production of aluminium, characterised by

— a filler piper (16) flanged to the silo outlet opening and extending more steeply than 45°, which

— opens into the upper half of a downwardly closed quantity-regulating pipe (18) inclined likewise by at least 45° in relation to the horizontal, with the longitudinal axes of quantity-regulating and filler pipes forming an angle (α) of at least 45°,

— a compressed-air conduit (26) with a control valve (36) actuatable by means of a time relay, opening into the lowermost region of the quantity-regulating pipe (18),

— a receiving or braking chamber (21) for the ejected bulk material plug, connected to the upper opening of the quantity-regulating pipe (18), and

— a discharge pipe (22) arranged beneath the receiving or braking chamber (21) and extending approximately vertically at least in the upper region, which pipe feeds the bulk material, under the action of gravity, completely to a predetermined position in the reaction vessel.

2. Device according to claim 1, characterised in that the longitudinal axes of quantity-regulating pipe (18) and filler pipe (16) lie in one common vertical plane.

3. Device according to claim 1 or 2, characterised in that the flat bottom (24) which downwardly closes the quantity-regulating pipe (18) is made, at the entry of the pressure conduit (26), at an acute angle to the pipe wall, preferably with an angle (β) of 30—60°.

4. Device according to at least one of claims 1—3, characterised in that the cross-section of the quantity-regulating pipe (18) is widened in the uppermost region to the cross-section of the discharge pipe (22), and in that the two pipes welded with one another at an acute angle (γ) of preferably 30—60° form the receiving or braking chamber (21).

5. Device according to at least one of claims 1—3, characterised in that a lid (44) arranged above the entry of the quantity-regulating pipe (18) into the discharge pipe (22), which has at least double cross-section, extends obliquely upwards, preferably with an angle (γ) of 30—60°, in relation to the direction of ejection, while the uppermost region of the discharge pipe (22) forms the receiving or braking chamber (21).

6. Device according to at least one of claims 1—5, characterised in that the cross-section of the filler pipe (16) is smaller than that of the quantity-regulating pipe (18), the ratio preferably being 0.1—0.5 : 1.

7. Device according to at least one of claims 1—6, characterised in that in the silo, directly above its outlet opening, there is arranged a downwardly open profiled piece (38) as relieving angle piece.

8. Device according to at least one of claims 1—7, characterised in that the pressure conduit (26) and the control valve (36) are preceded by a compressed-air accumulator (34) with preferably the same volume as the quantity-regulating pipe (18), which can be charged up through a small-calibre compressed-air connection conduit (30) provided with a constriction (28) and discharged by pneumatic actuation of the control valve (36).

9. Use of the device according to at least one of claims 1—8, characterised in that by means of brief opening of the control valve (36) at regulable time intervals, compressed air is forced into the quantity-regulating pipe (18) and the plug of bulk material embedded therein is shot into the receiving or braking chamber(21).

10. Use according to claim 9, characterised in that the compressed air is forced into the quanti ty-regulating pipe (18) during 0.3—2 seconds with a pressure of 4—8 bar.

## Revendications

1 Dispositif pour amener par portions un matériau en vrac fluidisable depuis un silo muni d'au moins une ouverture de sortie jusqu'à un récipient de réaction, en particulier pour amener de l'alumine depuis un silo journaler jusqu'à une découpe dans la croûte d'une cellule à électrolyse ignée pour la fabrication de l'aluminium, caractérisé par

— un tube de remplissage (16) relié par flasque à l'ouverture de sortie du silo et courant avec une pente supérieure à 45°, qui
— débouche dans la moitié supérieure d'un tube de dosage (18) également incliné à au moins 45° sur l'horizontale et fermé par le bas, étant précisé que les axes longitudinaux du tube de dosage et du tube de remplissage forment un angle (α) d'au moins 45,
— une conduite d'air comprimé (26) débouchant dans la zone la plus basse du tube de dosage (18) et comportant un robinet de commande (36) manœuvrable au moyen d'un relais temporisé,
— une chambre de capture et de freinage (21) raccordée à l'ouverture supérieure du tube de dosage (18) pour le bouchon de matériau en vrac expulsé, et
— un tube d'évacution (22) courant à peu près verticalement au moins dans la zone supérieure, disposé en dessous de la chambre de capture et de freinage (21) et amenant entièrement le matériau en vrac, sous l'action de la gravitation, à un endroit prédéterminé du récipient de réaction.

2. Dispositif selon la revendication 1, characte-rise en ce que les axes longitudinaux des tubes de dosage (18) et des tubes de remplissage (16) sont dans un plan vertical commun.

3 Dispositif selon la revendication 1 ou la revendication 2, caractérisé en ce que le fond (24) plan qui forme par dessous les tubes de dosage (18) est conçu, à l'endroit de l'embouchure de la conduite (26), avec un angle aigu par rapport à la paroi tubulaire, de préférence avec un angle (β) de 30—60.

4. Dispositif selon au moins l'une des revendications 1—3, caractérisé en ce que la section du tube de dosage (18) est, dans la zone la plus élevée, élargie pour arriver à la section du tube d'évacuation (22); et en ce que les deux tubes soudés sous un angle aigu (γ), valant de préférence 30—60°, forment la chambre de capture et de freinage (21).

5. Dispositif selon au moins l'une des revendications 1—3, caractérisé en ce qu'un couvercle (44) disposé au-dessus de l'embouchure du tube de dosage (18) dans le tube d'évacuation (22), présentant au moins la section double, court obliquement vers le haut par rapport à la direction du tir, de préférence sous un angle (γ) de 30—60°, étant précisé que la zone la plus élevée du tube d'évacuation (22) constitue la chambre de capture et de freinage (21).

6. Dispositif selon au moins l'une des revendications 1—5, caractérisé en ce que la section du tube de remplissage (16) est inférieure à celle du tube du dosage (18), ce rapport étant de préférence 0,1—0,5 : 1.

7. Dispositif selon au moins l'une des revendications 1—6, caractérisé en ce que dans le silo, immédiatement au-dessus de son ouverture de sortie, est disposé un morceau de profilé (38), ouvert vers le bas, pour former un dièdre de décharge.

8. Dispositif selon au moins l'une des revendications 1—7, caractérisé en ce qu'en amont de la conduite sous pression (26) et du robinet de commande (36) est disposé un accumulateur d'air comprimé (34) ayant de préférence le même volume que le tube de dosage (18), que l'on peut charger par l'intermédiaire d'une conduite de raccordement d'air comprimé (30) de petit calibre et munie d'un étranglement (28) que l'on peut décharger par la manœuvre pneumatique du robinet de commande (36).

9. Procédé pour l'exploitation du dispositif selon au moins l'une des revendications 1—8, caractérisé en ce que au moyen d'une ouverture de brève durée du robinet de commande (36) à des intervalles de temps réglables, on envoie de l'air comprimé dans le tube de dosage (18); et en ce que le bouchon de matériau en vrac qui y est encastré est expulsé dans la chambre de capture et de freinage (21).

10. Procédé selon la revendication 9, caractérisé en ce que l'air comprimé est envoyé dans le tube de dosage (18) pendant 0,3—2 secondes, sous une pression de 4—8 bars.

Fig. 1

Fig. 2